# EUROPÄISCHE PATENTSCHRIFT

(11) **EP 2 931 819 B1**
(45) Veröffentlichungstag und Bekanntmachung des Hinweises auf die Patenterteilung: **27.02.2019**
(21) Anmeldenummer: 13811191.9
(22) Anmeldetag: 17.12.2013
(51) Int. Cl.: C09D 123/08, B05D 7/22, B65D 25/14, B65D 1/12, C09D 5/02

(54) **HOCHVERNETZENDE LACKFORMULIERUNG FÜR DOSENINNENFLÄCHEN**
HIGHLY CURABLE COATING FORMULATION FOR THE INNER SURFACES OF CANS
FORMULATION DE VERNIS HAUTEMENT RÉTICULÉE POUR SURFACES INTÉRIEURES DE BOÎTES

(30) Priorität: 17.12.2012 DE 102012223355
(43) Veröffentlichungstag der Anmeldung: 21.10.2015
(73) Patentinhaber: Henkel AG & Co. KGaA, 40589 Düsseldorf (DE)
(72) Erfinder: DE ZEEUW, Ard, 40593 Düsseldorf (DE); SCHNEIDER, Wolfgang, 40764 Langenfeld (DE); MÖLLER, Thomas, 40593 Düsseldorf (DE); AUWEILER, Nicole, 41541 Dormagen (DE)
(86) Internationale Anmeldenummer: PCT/EP2013/076963
(87) Internationale Veröffentlichungsnummer: WO 2014/095912

(56) Entgegenhaltungen:
- EP-A1- 2 505 625
- JP-A- 2005 075 879
- JP-A- 2006 022 127

## Beschreibung

Die vorliegende Erfindung betrifft einen Wasser basierten Doseninnenlack basierend auf einem Copolymer oder einer Copolymerenmischung zumindest eines aliphatischen und acyclischen Alkens mit zumindest einer α,β-ungesättigten Carbonsäure in wasserdispergierter Form, wobei der Doseninnenlack einen wasserlöslichen Härter ausgewählt aus anorganischen Verbindungen der Elemente Zr und/oder Ti enthält, so dass weitgehend auf organische Härtersysteme verzichtet werden kann. Des Weiteren betrifft die vorliegende Erfindung ein Verfahren zur Innenbeschichtung von Weißblech- oder Aluminiumdosen, bei dem der zuvor genannte Doseninnenlack unmittelbar auf die metallischen Innenflächen der Dosen aufgebracht und ausgehärtet wird, ohne dass zuvor eine lackhaftungsverbessernde Konversionsbehandlung der Innenflächen der Dosen vorgenommen werden muss.

Weißblechband gilt in der Lebensmittelindustrie als geeignetes Material für die Herstellung von Verpackungseinheiten zur Aufnahme wässriger Flüssigkeiten oder konservierter Lebensmitteln, da Weißblech aufgrund der elektrochemisch edlen Zinnschicht auch über einen längern Zeitraum nur geringe Mengen an potentiell gesundheitsgefährdenden Zinn-Salzen an das mit der Zinnoberfläche in Kontakt stehende Lebensmittelprodukt abgibt. Weißblechband ist daher ein wichtiges Ausgangsprodukt für Lebensmittelverpackungen, beispielsweise für die Herstellung von Dosen zur Aufnahme von Getränken. Auch Aluminiumband ist aufgrund seiner passiven Oxidschicht ein geeignetes Ausgangsmaterial für die Herstellung von Dosen zur Getränkeabfüllung. Zusätzlich sind Aluminiumsalze, die in geringen Mengen von der Flüssigkeit aufgenommen werden, gesundheitlich nicht bedenklich. Die Verpackungsindustrie bringt bei der Dosenherstellung eine organische Schutzschicht auf die Innenfläche der Dose auf oder verwendet alternativ bereits mit einem organischen Schutzlack versehenes Bandmaterial zur Dosenfertigung. Die Beschichtung der Innenflächen mit dem organischen Lack verhindert, dass die metallischen Doseninnenflächen unmittelbar mit der Flüssigkeit in Kontakt stehen. Damit wird zum einen eine deutlich verringerte Korrosion des Grundmaterials erzielt und zum anderen der Eintrag von Metallsalzen minimiert, so dass der Geschmack des Lebensmittels auch bei längerer Lagerung oder Bevorratung der Getränkedosen nicht negativ verändert wird.

Ein weiterer Aspekt bei der Herstellung von Dosen betrifft die Zusammensetzung des Lackes, der konventionell aus Bisphenol A basierten Epoxid-Harzen besteht. Derartige Epoxide mit Bisphenol A Grundkörper stehen in Verdacht estrogenartig zu wirken und bei Männern reproduktionstoxisch zu sein. Bei Kontakt ausgehärteter Lackformulierungen mit säurehaltigen wässrigen Lebensmitteln kann Bisphenol A aus dem Lack in das bevorratete Lebensmittel freigesetzt werden. Auch die Lackhärtung und die damit einhergehende Vernetzung der Lackbestandteile verläuft praktisch nie vollständig, so dass unreagierte Bisphenol A basierte Epoxide auch durch Diffusion in das Lebensmittel gelangen können. Es besteht daher ein Bedarf nach Bisphenol A freien Rezepturen für die Innenbeschichtung von Dosen zur Bevorratung von Lebensmitteln zumal verschiedene nationale Gesetzgebungsinitiativen, unter anderem veranlasst durch die EU-Direktive 2002/72/EU, zur Festlegung von Höchstgrenzen für die Migration von Bisphenol A aus Umverpackungen in Lebensmittel bestehen.

Die US 2008/0193689 offenbart eine epoxid-basierte Lackzusammensetzung geeignet für die Verwendung als Dosenlack, die neben dem modifizierten Epoxid-Harz mono- und difunktionale niedermolekulare organische Verbindungen befähigt zur Reaktion mit dem Epoxid-Harz enthält. Der Lack ist dabei so formuliert, dass nach der Härtung nur sehr geringe Mengen an unreagiertem Bisphenol A basierten Epoxiden in der Beschichtung verbleiben, so dass bei Verwendung der Rezeptur als Doseninnenlack nur Spuren an Bisphenol A aus der ausgehärteten Lackbeschichtung in das bevorratete Lebensmittel gelangen können.
Die EP 2031006 schlägt hingegen Doseninnenlacke auf Basis spezifischer alicyclischer Epoxide vor, um auf diese Weise die Einformulierung Bisphenol A basierter Epoxide zu umgehen.

Die WO 2006/045017 stellt eine Lackformulierung für Getränkedosen bereit, die Latizes von ethylenisch ungesättigten Monomeren und eine wässrige Dispersion eines säurefunktionalen Polymers in Gegenwart von Aminen umfassen, wobei die Latices zur Vernetzung zumindest teilweise aus Monomeren mit einer Glycidyl-Gruppe aufgebaut sind. Derartige Doseninnenlacke können frei von Bisphenol A basierten Epoxiden formuliert werden.

Darüber hinaus sind Alternativen zu Epoxid-basierten Doseninnenlacken im Stand der Technik bekannt, die in Sprühverfahren aufgebracht werden können, beim Aushärten eine homogene Filmbildung ergeben und eine hohe Flexibilität bei gleichzeitig guter Lackhaftung und Beständigkeit gegenüber wässrigen Zusammensetzungen aufweisen.
So offenbart die EP 2505625 einen Wasser basierten Doseninnenlack enthaltend ein Copolymer oder eine Copolymerenmischung zumindest eines aliphatischen und acyclischen Alkens mit zumindest einer α,β-ungesättigten Carbonsäure in wasserdispergierter Form, wobei die Säurezahl des Copolymers oder der Copolymerenmischung zumindest 20 mg KOH / g, jedoch nicht mehr als 200 mg KOH / g beträgt, und mindestens einen wasserdispergierten oder wasserlöslichen Härter ausgewählt aus der Gruppe der Aminoplaste und/oder der Gruppe der Carbodiimide.

Aus den Offenlegungsschriften JP 2006 022127 A und JP 2005 075879 A sind wässrige Beschichtungszusammensetzungen allgemein für Metalle bekannt, die neben einem teilneutralisierten lonomer, beispielsweise auf Basis von Methacrylsäure, eine wasserlosliche Zr-Verbindung enthalten.

Die Aufgabe der vorliegenden Erfindung besteht einerseits darin, einen weiteren zu Epoxid-basierten Lacken alternativen Doseninnenlack bereitzustellen, der sich dadurch auszeichnet, im Aushärteprozess homogene, gut vernetzte Lackbeschichtungen mit hoher Beständigkeit gegenüber Flüssigkeiten auszubilden, und andererseits darin, die korrosionsschützenden Eigenschaften der Lackbeschichtung und die Lackhaftung weiter zu verbessern. Weiterhin muss die Lackformulierung im Sprühverfahren auf die Doseninnenflächen aufzubringen sein und, um Lackabplatzungen beim Umformen der Dosenzylinder zu vermeiden, nach dem Aushärten dünne Lackfilme mit hoher Flexibilität ergeben.

Überraschenderweise wurde gefunden, dass die Verwendung eines Härtersystems basierend auf anorganischen Verbindungen der Elemente Zr und/oder Ti eine hervorragende Vernetzung von im Submikrometerbereich wasserdispergierten Copolymeren auf Basis von α,β ungesättigten Carbonsäuren ermöglicht, so dass auf organische Härtersysteme zur Aushärtung des Dosenlackes vollständig verzichtet werden kann. Aufgrund der Tatsache, dass bei der Doseninnenbeschichtung nunmehr im Wesentlichen ein Bindemittelbestandteil verwendet wird, können chemisch äußerst homogene Lackfilme erzeugt werden. Des Weiteren wird aufgrund des Anteils des anorganischen Härters im Dosenlack die Doseninnenfläche in Kontakt mit Flüssigkeiten hervorragend vor Korrosion geschützt und die Lackhaftung derart verbessert, dass ein sonst in der Dosenbeschichtung üblicher nasschemischer Vorbehandlungsschritt zur Aufbringung eines korrosionsschützenden Lackhaftgrundes unterbleiben kann.
Die Aufgabe der vorliegenden Erfindung wird daher gelöst mittels eines Wasser basierten Doseninnenlacks enthaltend neben Wasser
a) ein Copolymer oder eine Copolymerenmischung zumindest eines aliphatischen und acyclischen Alkens mit zumindest einer α,β-ungesättigten Carbonsäure in wasserdispergierter Form, wobei die Säurezahl des Copolymers oder der Copolymerenmischung zumindest 20 mg KOH / g, jedoch nicht mehr als 200 mg KOH / g beträgt und die Säuregruppen des Copolymers oder der Copolymerenmischung in wasserdispergierter Form zumindest zu 20%, jedoch nicht mehr als zu 60% neutralisiert vorliegen, und
b) mindestens einen wasserlöslichen Härter basierend auf anorganischen Verbindungen der Elemente Zr und/oder Ti,
wobei die dispergierten polymeren Bestandteile des Wasser basierten Lacks einen D50-Wert von weniger als 1 µm aufweisen, und wobei der Gewichtsanteil des Härters gemäß Komponente b) bestimmt als Gewichtsanteil der Elemente Zr und/oder Ti bezogen auf den Feststoffanteil des Copolymers oder der Copolymerenmischung gemäß Komponente a) dividiert durch die dimensionslose Säurezahl des Copolymers oder der Copolymerenmischung gemäß Komponente a) in Gramm KOH/g größer als 0,04·X_{Zr} + 0,02·X_{Ti}, jedoch kleiner als 0,12·X_{Zr} + 0,06·X_{Ti} ist, wobei X_{Zr} und X_{Ti} die jeweiligen Massenbrüche der Elemente Zr oder Ti des Härters gemäß Komponente b) bezogen auf den Gesamtanteil der Elemente Zr und Ti des Härters sind, und wobei nicht mehr als 0,1 Gew.-% an wasserlöslichen und wasserdispergierten organischen Härtern mit Amino-Gruppen, Imin-Gruppen oder Carbodiimid-Gruppen enthalten sind.

Unter Dosen werden erfindungsgemäß metallische Behältnisse zur Abfüllung, Lagerung und Bevorratung von Lebensmitteln, insbesondere von Getränken, verstanden.
In diesem Zusammenhang ist ein Doseninnenlack eine Lackformulierung, die zur Ausbildung einer Lackschicht auf die Innenflächen der Dose aufgebracht, verfilmt und ausgehärtet wird, um den unmittelbaren Kontakt des Lebensmittels mit dem metallischen Dosenmaterial bei der Abfüllung, Lagerung und Bevorratung desselben zu unterbinden.

Ein Wasser basierter Lack umfasst erfindungsgemäß eine Dispersion und/oder Emulsion von organischen Polymeren in einer kontinuierlichen wässrigen Phase, wobei unter einer wässrigen Phase im Rahmen der vorliegenden Erfindung auch eine homogene Mischung von Wasser und einem wassermischbaren Lösemittel verstanden wird. Der Begriff "in wasserdispergierter Form" bedeutet demnach, dass das jeweilige Polymer in der kontinuierlichen wässrigen Phase fest- oder flüssigdispers vorliegt.

Als Copolymerenmischung gelten erfindungsgemäß Mischungen chemisch und/oder strukturell unterschiedlicher Copolymere zumindest eines aliphatischen und acyclischen Alkens mit zumindest einer α,β-ungesättigten Carbonsäure. So können in einer Copolymerenmischung einer erfindungsgemäßen Lackformulierung beispielsweise Copolymere, die unterschiedliche Alkene oder unterschiedliche α,β-ungesättigte Carbonsäuren als Comonomere enthalten oder eine unterschiedliche Anzahl an ansonsten gleichen Comonomeren im Copolymer aufweisen, nebeneinander vorliegen.

Die Säurezahl ist erfindungsgemäß eine experimentell zu bestimmende Kennzahl, die ein Maß für die Anzahl der freien Säuregruppen im Copolymer oder in der Copolymerenmischung ist. Die Säurezahl wird bestimmt, indem eine eingewogene Menge des Copolymers oder der Copolymerenmischung in einem Lösemittelgemisch aus Methanol und destilliertem Wasser im Volumenverhältnis 3 : 1 gelöst und anschließend mit 0,05 mol/l KOH in Methanol potentiometrisch titriert wird. Die potentiometrische Messung erfolgt mit einer Einstabmesskette (LL-Solvotrode® der Fa. Metrohm; Bezugselektrolyt: 0,4 mol/l Tetraethylammoniumbromid in Ethylenglykol). Die Säurezahl entspricht dabei der hinzugesetzten Menge an KOH in Milligramm pro Gramm Copolymer bzw. Copolymerenmischung im Wendepunkt der potentiometrischen Titrationskurve.

Der D50-Wert gibt an, dass 50 Vol.-% der dispergierten polymeren Bestandteile des Doseninnenlackes eine Größe unterhalb des angegebenen Wertes aufweisen.
Der D50-Wert kann aus volumengewichteten kumulativen Partikelgrößenverteilungen ermittelt werden, wobei dem Fachmann entsprechende dynamische Lichtstreumethoden bekannt sind, mit deren Hilfe die Partikelgrößenverteilungskurve gemessen werden kann.

Die dispergierten polymeren Bestandteile des Wasser basierten Lacks weisen einen D50-Wert von weniger als 1 µm auf und können daher in Anwesenheit des anorganischen Härters gemäß Komponente b) beim Eintrocknen und Aushärten eines Nassfilms des erfindungsgemäßen Doseninnenlackes optimal vernetzen. Eine gröbere Dispergierung der polymeren Bestandteile, insbesondere der Copolymere oder der Copolymerenmischung gemäß der Komponente a) der vorliegenden Erfindung erschwert eine homogene Vernetzung, da eine Durchdringung des wasserlöslichen Härters mit dem wasserdispergierten polymeren Bestandteilen gemäß Komponente a) nur in sehr begrenztem Maße erfolgen kann. Erfindungsgemäß bevorzugt in diesem Zusammenhang ist eine solche Dispergierung der polymeren Bestandteile, in der ein D50-Wert von weniger als 0,5 µm realisiert vorliegt. Umgekehrt erhöht sich die Viskosität des Doseninnnenlackes bei noch feinteiliger werdender Dispergierung der polymeren Bestandteile, so dass der D50-Wert vorzugsweise 0,1 µm nicht unterschreitet, um eine einfache Applikation des Doseninnenlackes weiterhin gewährleisten zu können.

Das Copolymer oder die Copolymerenmischung des aliphatischen und acyclischen Alkens mit einer α,β-ungesättigten Carbonsäure mit der vorgegebenen Säurezahl zeigt als ein auf Metalloberflächen aufgeschmolzener dünner Film bereits eine gute Lackhaftung, insbesondere auf Oberflächen von Weißblech und Aluminium. Zusätzlich vermitteln die Säuregruppen dem Copolymers oder der Copolymerenmischung die inhärente Eigenschaft selbstemulgierend zu sein, so dass in wässriger Phase auch ohne Anwesenheit von Emulgatoren bei Anwendung von Scherkräften mikropartikuläre Aggregate gebildet werden können. Das Vorliegen der Copolymere oder Copolymerenmischung in Form mikropartikulärer Aggregate verleiht dem erfindungsgemäßen Lack thixothrope Eigenschaften, so dass ein homogener Nassfilm des Wasser basierten Lackes auf den Innenflächen der Dose appliziert werden kann, der bis zu seiner Verfilmung und Härtung bestehen bleibt und nicht unter der Schwerkraftwirkung im Doseninneren zusammenläuft.

Liegt die Säurezahl der Copolymere oder Copolymerenmischung von Alkenen und α,β-ungesättigten Carbonsäuren unterhalb von 20 mg KOH / g, so besitzt eine ausgehärtete Lackformulierung nach der Art der vorliegenden Erfindung eine nicht ausreichende Haftung auf Metalloberflächen und eignet sich daher nicht als filmbildender Bestandteil von Doseninnenlacken. Umgekehrt bedingt eine Säurezahl der Copolymere oder der Copolymerenmischung von Alkenen und α,β-ungesättigten Carbonsäuren oberhalb von 200 mg KOH / g als filmbildender Bestandteil in Doseninnenlacken eine nur unzureichende Barrierewirkung gegenüber korrosiv wirkenden Ionen in wässrigen Medien und zudem eine Lackbeschichtung, die gegenüber Wasser bei Temperaturen oberhalb von 60 °C vergleichsweise wenig widerstandfähig ist.

Der Gewichtsanteil der aliphatischen und acyclischen Alkene beträgt im Copolymer oder in der Copolymerenmischung vorzugsweise zumindest 40 Gew.-%, besonders bevorzugt zumindest 60 Gew.%, jedoch vorzugsweise nicht mehr als 95 Gew.-%. Hierdurch wird gewährleistet, dass die Durchlässigkeit des auf der Doseninnenfläche ausgehärteten Lackes für Ionen und das Aufquellen desselben bei Kontakt mit wässrigen Medien bei gleichzeitig hinreichender Benetzungsfähigkeit und Haftung des Lackes zum Dosenmaterial maximal erniedrigt wird.

Bevorzugte aliphatische und acyclische Alkene der erfindungsgemäß enthaltenen Copolymere oder der Copolymerenmischung sind ausgewählt aus Ethen, Propen, 1-Buten, 2-Buten, Isobuten, 1,3-Butadien und/oder 2-Methylbuta-1,3-dien, besonders bevorzugt Ethen. Bevorzugte α,β-ungesättigten Carbonsäuren der erfindungsgemäß enthaltenen Copolymere oder der Copolymerenmischung sind ausgewählt aus Zimtsäure, Crotonsäure, Fumarsäure, Itaconsäure, Maleinsäure, Acrylsäure und/oder Methacrylsäure, besonders bevorzugt Acrylsäure und/oder Methacrylsäure, insbesondere Acrylsäure.

Weitere Comonomere, die in einem erfindungsgemäßen Doseninnenlack zusätzlicher Bestandteil der Copolymere oder Copolymerenmischung sein können, sind ausgewählt aus Estern von α,β-ungesättigten Carbonsäuren, vorzugsweise lineare oder verzweigte Alkylester der Acrylsäure und/oder Methacrylsäure mit nicht mehr als 12 Kohlenstoffatomen im aliphatischen Rest. Derartige Comonomere verbessern die Haftung des ausgehärteten Doseninnenlackes auf Metalloberflächen aufgrund einer erhöhten Beweglichkeit des Polymergrundgerüstes, die wiederum die Orientierung der oberflächenaffinen Säuregruppen zur Metalloberfläche erleichtert. Dieser Effekt kommt insbesondere bei niedrigen Säurezahlen des Copolymers unterhalb von 100 mg KOH / g zum Tragen. Es zeigt sich allgemein, dass niedrige Säurezahlen der Copolymere oder der Copolymerenmischung die Barriereeigenschaften der ausgehärteten erfindungsgemäßen Lackformulierung bei Exposition mit wässrigen Medien verbessern. Dementsprechend sind Copolymere oder Copolymermischungen, die zusätzlich die zuvor beschriebenen Comonomere enthalten, mit Säurezahlen unterhalb von 100 mg KOH / g, insbesondere unterhalb von 60 mg KOH / g erfindungsgemäß bevorzugt.

Das Copolymer oder die Copolymerenmischung des erfindungsgemäßen Doseninnenlackes enthält vorzugsweise weniger als 0,05 Gew.-%, besonders bevorzugt weniger als 0,01 Gew.-%, an epoxidisch gebundenem Sauerstoff.

Für eine gute Filmbildung beim Aushärten des Doseninnenlackes ist es erforderlich, dass das Wasser dispergierte Copolymer oder die Wasser dispergierte Copolymerenmischung des Doseninnenlackes nach Verflüchtigung der wässrigen Phase in den schmelzflüssigen Zustand übergeht. Um diesem Erfordernis zu genügen, sind Copolymere oder Coplymerenmischungen bevorzugt, die als solche eine Glasübergangstemperatur von nicht mehr als 80 °C, besonders bevorzugt von nicht mehr als 60 °C aufweisen. Üblicherweise besitzen Copolymere oder Copolymerenmischungen zusammengesetzt aus Alkenen und α,β-ungesättigten Carbonsäuren mit einem gewichtsmittleren Molekulargewicht M_{w} von nicht mehr als 20.000 u Glasübergangstemperaturen deutlich unterhalb von 100 °C, so dass Copolymere oder Copolymermischungen mit einem gewichtsmittleren Molekulargewicht von nicht mehr als 20.000 u, insbesondere von nicht mehr als 15.000 u in erfindungsgemäßen Doseninnenlacken bevorzugt sind.

Die Säuregruppen des in Wasser dispergierten Copolymers oder der in Wasser dispergierten Copolymerenmischung des erfindungsgemäßen Doseninnenlackes liegen zumindest teilweise neutralisiert vor. Diese Maßnahme erhöht die Fähigkeit der Copolymere zur Selbstemulgierung in der wässrigen Phase, so dass stabilere Lackformulierungen mit geringeren Partikelgrößen der dispergierten Copolymere resultieren. Dementsprechend enthält der Doseninnenlack vorzugsweise zusätzlich ein Neutralisationsmittel.

Als Neutralisationsmittel, die in einer solchen bevorzugten Formulierung zusätzlich im Doseninnenlack enthalten sind, eignen sich vorzugsweise Ammoniak, Amine, metallisches Aluminium und/oder Zink, vorzugsweise in Pulverform, sowie wasserlösliche Oxide und Hydroxide der Elemente Li, Na, K, Mg, Ca, Fe(II) und Sn(II). Dem Fachmann ist an dieser Stelle bewusst, dass die Neutralisationsmittel entsprechend ihrer Funktion mit den Bestandteilen des erfindungsgemäßen Lackes Neutralisationsreaktionen eingehen und daher als solche in diesen bevorzugten Formulierungen gegebenenfalls nur indirekt in Form ihrer Reaktionsprodukte nachweisbar sind. Beispielsweise reagiert metallisches Aluminium- oder Zinkpulver in der wässrigen Phase unter Wasserstoffentwicklung zu den entsprechenden Hydroxiden, die wiederum die Neutralisation von Säuregruppen des Copolymers oder der Copolymerenmischung herbeiführen, so dass im erfindungsgemäßen Lack letztlich nur die Kationen der Elemente Aluminium oder Zink nachweisbar sind. Die Neutralisationsmittel sind daher lediglich als Formulierungshilfe des erfindungsgemäßen Doseninnenlackes zu verstehen.

Besonders bevorzugte Neutralisationsmittel sind Ammoniak und Amine, da diese beim Aushärten des Lackes bei erhöhter Temperatur in die Gasphase übergehen und damit nicht im ausgehärteten Doseninnenlack zurückbleiben. Bevorzugte Amine, die als Neutralisationsmittel in erfindungsgemäßen Doseninnenlacken eingesetzt werden können sind Morpholin, Hydrazin, Hydroxylamin, Monoethanolamin, Diethanolamin, Triethanolamin, Dimethylethanolamin und/oder Diethylethanolamin.

Die Neutralisation der Säuregruppen des Copolymers oder der Copolymerenmischung im erfindungsgemäßen Doseninnenlack erfolgt in einem solchen Maß, dass zumindest 20%, vorzugsweise zumindest 30% der Säuregruppen neutralisiert vorliegen. Hohe Neutralisationsgrade oberhalb von 50%, vorzugsweise oberhalb von 40%, sind in einer bevorzugten Ausführungsform des Doseninnenlackes zu vermeiden, da die nahezu vollständig neutralisierten Copolymere bereits in signifikanten Mengen in Wasser gelöst und damit nicht dispergiert vorliegen, was eine hohe Viskosität des Lackes zur Folge hat, so dass derartige Formulierungen als Doseninnenlacke wegen ihrer rheologischen Eigenschaften weniger gut geeignet sind.

In diesem Zusammenhang ist es bevorzugt, das Neutralisationsmittel dem Doseninnenlack in einer solchen Menge hinzuzuformulieren, dass bezogen auf 1 g des Copolymers oder der Copolymerenmischung zumindest 4/z µmol, vorzugsweise zumindest 6/z µmol jeweils multipliziert mit der Säurezahl des Copolymers oder der Copolymerenmischung an Neutralisationsmittel enthalten sind, jedoch vorzugsweise nicht mehr als 10/z µmol, besonders bevorzugt nicht mehr als 8/z µmol, multipliziert mit der Säurezahl des Copolymers oder der Copolymerenmischung. Der Divisor z ist dabei eine natürliche Zahl und entspricht der Äquivalentzahl der Neutralisationsreaktion. Die Äquivalentzahl gibt an wie viel Mol Säuregruppen des Copolymers oder der Copolymerenmischung ein Mol des Neutralisationsmittels zu neutralisieren vermag.

Ein erfindungsgemäßer Doseninnenlack enthält als Härter wasserlösliche anorganische Verbindungen der Elemente Zr und/oder Ti. Derartige anorganische Verbindungen sind wasserlöslich im Sinne der vorliegenden Erfindung, wenn ihre Löslichkeit in entionisiertem Wasser (κ<1µScm⁻¹) bei 20°C jeweils zumindest 1 g/l bezogen auf das jeweilige Element Zr und/oder Ti beträgt. Bevorzugte Vertreter dieser wasserlöslichen anorganischen Härter sind ausgewählt aus Alkoxiden und/oder Carbonaten, besonders bevorzugt aus Tetrabutoxyzirkonat, Tetrapropoxyzirkonat, Tetrabutoxytitanat, Tetrapropoxytitanat, Ammoniumzirkoniumcarbonat und/oder Ammoniumtitaniumcarbonat, insbesondere bevorzugt Ammoniumzirkoniumcarbonat.

Für eine hinreichende Vernetzung der Copolymer bzw. der Copolymerenmischung gemäß Komponente a) des Doseninnenlackes einerseits und eine gute Lackhaftung andererseits, die eine zusätzliche lackhaftungsverbesserende Vorbehandlung der Doseninnenflächen vor der Aufbringung des Doseninnenlacks überflüssig macht, ist erforderlich, dass der Gewichtsanteil des Härters gemäß Komponente b) bestimmt als Gewichtsanteil der Elemente Zr und/oder Ti bezogen auf den Feststoffanteil des Copolymers oder der Copolymerenmischung gemäß Komponente a) dividiert durch die dimensionslose Säurezahl des Copolymers oder der Copolymerenmischung gemäß Komponente a) in Gramm KOH/g größer als 0,04·X_{Zr} + 0,02·X_{Ti} ist. Umgekehrt ist erforderlich, dass eben dieses Gewichtsverhältnis dividiert durch die dimensionslose Säurezahl des Copolymers oder der Copolymerenmischung gemäß Komponente a) in Gramm KOH/g kleiner als 0,12·X_{Zr} + 0,06·X_{Ti} ist, um stabile Formulierungen des Doseninnenlacks zu erhalten. X_{Zr} und X_{Ti} sind dabei die jeweiligen Massenbrüche der Elemente Zr oder Ti des Härters gemäß Komponente b) bezogen auf den Gesamtanteil der Elemente Zr und Ti des Härters.

Ein weiterer Vorteil erfindungsgemäßer Doseninnenlacke besteht darin, dass auf organische Härter, die Amino-Gruppen, Imin-Gruppen oder Carbodiimid-Gruppen aufweisen, vollständig verzichtet werden kann. In einer bevorzugten Ausführungsform des erfindungsgemäßen Doseninnenlackes sind daher weniger als 0,01 Gew.-% und besonders bevorzugt keine wasserlöslichen und wasserdispergierten organischen Härtern mit Amino-Gruppen, Imin-Gruppen oder Carbodiimid-Gruppen enthalten.

Der erfindungsgemäße Doseninnenlack kann jedoch zusätzlich ein oder mehrere organische Polymere oder Copolymere, die Hydroxyl-Gruppen aufweisen, die jedoch nicht auf aromatischen Epoxiden beruhen, enthalten, vorzugsweise Polymere und/der Copolymere von Vinylalkohol, wobei die Hydroxylzahl der organischen Polymere oder Copolymere vorzugsweise zumindest 100 mg KOH/g beträgt. Derartige Polymere oder Copolymer erhöhen in Gegenwart des wasserlöslichen anorganischen Härters nochmals den Vernetzungsgrad beim Aushärten des Doseninnenlackes. Der Gewichtsanteil dieser Polymere und/der Copolymere bezogen auf den Gewichtsanteil des Copolymers oder der Copolymerenmischung gemäß Komponente a) des erfindungsgemäßen Doseninnenlackes beträgt jedoch vorzugsweise nicht mehr als 20 %, wobei insgesamt vorzugsweise nicht mehr als 5 Gew.-%, besonders bevorzugt insgesamt nicht mehr als 1 Gew.-% an organischen Polymeren oder Copolymeren, die Hydroxyl-Gruppen aufweisen, die jedoch nicht auf aromatischen Epoxiden beruhen, zusätzlich enthalten sind.

Die Hydroxylzahl ist ein Maß für die Anzahl an freien Hydroxylgruppen im Polymer oder in einer Polymerenmischung und wird experimentell durch potentiometrische Titration bestimmt. Hierfür wird eine eingewogene Menge des Polymers oder der Polymerenmischung in einer Reaktionslösung von 0,1 mol/l Phtalsäureanhydrid in Pyridin bei 130 °C für 45 Minuten erwärmt und zunächst mit dem 1,5 fachen Volumen der Reaktionslösung an Pyridin und anschließend mit dem 1,5 fachen Volumen der Reaktionslösung an entionisiertem Wasser (κ < 1 µScm⁻¹) versetzt. Die freigesetzte Menge an Phtalsäure wird in diesem Gemisch mittels 1 M Natronlauge titriert. Die potentiometrische Messung erfolgt mit einer Einstabmesskette (LL-Solvotrode® der Fa. Metrohm; Bezugselektrolyt: 0,4 mol/l Tetraethylammoniumbromid in Ethylenglykol). Die Hydroxylzahl entspricht dabei der hinzugesetzten Menge an NaOH pro Gramm Polymer bzw. Polymerenmischung im Wendepunkt der potentiometrischen Titrationskurve.

Ein bevorzugter Doseninnenlack gemäß vorliegender Erfindung Doseninnenlack enthält zumindest 40 Gew.-% Wasser und
a) 4-30 Gew.-%, vorzugsweise 10-20 Gew.-%, des zuvor beschriebenen Copolymers oder der zuvor beschriebenen Copolymerenmischung in dispergierter Form,
b) 0,05-4 Gew.-%, vorzugsweise 0,1-2 Gew.-%, des mindestens einen Härters basierend auf anorganischen Verbindungen der Elemente Zr und/oder Ti,
c) nicht mehr als 0,1 Gew.-% an wasserlöslichen organischen Härtern mit Amino-Gruppen, Imin-Gruppen oder Carbodiimid-Gruppen;
d) nicht mehr als 5 Gew.-% an Emulgatoren ausgewählt aus nichtionischen Amphiphilen mit einem HLB-Wert von zumindest 8;
e) nicht mehr als 10 Gew.-%, vorzugsweise nicht mehr als 5 Gew.-%, an wassermischbaren organischen Lösemitteln;
f) nicht mehr als 10 Gew.-% an Hilfsstoffen ausgewählt aus Netzmitteln, Verlaufsmitteln, Entschäumern, Katalysatoren, Filmbildern, Stabilisatoren und/oder Neutralisationsmitteln.

Die vorliegende Erfindung umfasst ferner ein Verfahren zur Innenbeschichtung von Weißblech- oder Aluminiumdosen, bei dem die Innenflächen der Dosen ggf. zunächst gereinigt werden und anschließend - mit oder ohne dazwischenliegendem Spülschritt - ein Doseninnenlack auf die Doseninnenflächen aufgebracht wird, der
a) ein Copolymer oder eine Copolymerenmischung zumindest eines aliphatischen und acyclischen Alkens mit zumindest einer α,β-ungesättigten Carbonsäure in wasserdispergierter Form, wobei die Säurezahl des Copolymers oder der Copolymerenmischung zumindest 20 mg KOH / g, jedoch nicht mehr als 200 mg KOH / g beträgt und die Säuregruppen des Copolymers oder der Copolymerenmischung in wasserdispergierter Form zumindest zu 20%, jedoch nicht mehr als zu 60% neutralisiert vorliegen, und
b) mindestens einen wasserlöslichen Härter basierend auf anorganischen Verbindungen der Elemente Zr und/oder Ti enthält.

Insbesondere geeignet in einem erfindungsgemäßen Verfahren sind solche Doseninnenlacke, die gemäß vorliegender Erfindung als erfindungsgemäß gelten.

In einem bevorzugten erfindungsgemäßen Verfahren durchläuft die gereinigte Dose vor der Aufbringung des Doseninnenlackes keinen solchen nasschemischen Behandlungsschritt, der eine Konversionsbeschichtung mit zumindest 5 mg/m² bezogen auf solche Metallelemente bewirkt, die keine Bestandteile des Dosenmaterials sind. Insbesondere keine nasschemischen Behandlungsschritte mit chromfreien wässrigen Zusammensetzungen enthaltend wasserlösliche Verbindungen der Elemente Zr, Ti und/oder Si und vorzugsweise weniger als 0,1 Gew.-% an organischen Polymeren. Eine Reinigung der Doseninnenflächen vor der Aufbringung des Doseninnenlackes dient erfindungsgemäß der Bereitstellung einer von organischen Bestandteilen weitgehend befreiten metallischen Oberfläche und erfolgt vorzugsweise mit in der Oberflächenbehandlung von Aluminium bekannten alkalischen bis neutralen wässrigen Reinigern.

Im erfindungsgemäßen Verfahren wird der Doseninnenlack vorzugsweise in einer Trockenschichtauflage von zumindest 1 g/m², jedoch vorzugsweise in einer Trockenschichtauflage von nicht mehr als 10 g/m² auf die Innenfläche der Dose aufgebracht. Die Auftragung eines Nassfilms des Doseninnenlackes erfolgt vorzugsweise im Sprühverfahren, besonders bevorzugt im sogenannten Airless-Verfahren, bei dem der Doseninnenlack luftlos zerstäubt wird und so auf die Materialoberfläche aufgetragen wird. Bei diesen Sprühverfahren wird eine vorgegebene Menge des Doseninnenlackes mittels Sprühpistolen in das gereinigte und trockene Doseninnere eingebracht, während die Dose zur Ausbildung eines homogenen Nassfilms um ihre eigene Längsachse rotiert. Anschließend wird der Nassfilm auf den Doseninnenflächen in einem Trockenofen bei Temperaturen im Bereich von 120 °C bis 200 °C (Objekttemperatur) zu einem Lackfilm ausgehärtet. Der Aushärteprozess umfasst die Verflüchtigung der wässrigen Phase sowie die Verfilmung und Vernetzung der polymeren Bestandteile.

## Patentansprüche

1. Wasser basierter Doseninnenlack enthaltend neben Wasser
a) ein Copolymer oder eine Copolymerenmischung zumindest eines aliphatischen und acyclischen Alkens mit zumindest einer α,β-ungesättigten Carbonsäure in wasserdispergierter Form, wobei die Säurezahl des Copolymers oder der Copolymerenmischung zumindest 20 mg KOH / g, jedoch nicht mehr als 200 mg KOH / g beträgt und die Säuregruppen des Copolymers oder der Copolymerenmischung in wasserdispergierter Form zumindest zu 20%, jedoch nicht mehr als zu 60% neutralisiert vorliegen, und
b) mindestens einen wasserlöslichen Härter basierend auf anorganischen Verbindungen der Elemente Zr und/oder Ti,
wobei die dispergierten polymeren Bestandteile des Wasser basierten Lacks einen D₅₀-Wert von weniger als 1 µm aufweisen,
wobei der Gewichtsanteil des Härters gemäß Komponente b) bestimmt als Gewichtsanteil der Elemente Zr und/oder Ti bezogen auf den Feststoffanteil des Copolymers oder der Copolymerenmischung gemäß Komponente a) dividiert durch die dimensionslose Säurezahl des Copolymers oder der Copolymerenmischung gemäß Komponente a) in Gramm KOH/g größer als 0,04·X_{Zr} + 0,02·X_{Ti}, jedoch kleiner als 0,12·X_{Zr} + 0,06·X_{Ti} ist, wobei X_{Zr} und X_{Ti} die jeweiligen Massenbrüche der Elemente Zr oder Ti des Härters gemäß Komponente b) bezogen auf den Gesamtanteil der Elemente Zr und Ti des Härters sind,
und wobei nicht mehr als 0,1 Gew.-% an wasserlöslichen und wasserdispergierten organischen Härtern mit Amino-Gruppen, Imin-Gruppen oder Carbodiimid-Gruppen enthalten sind.

2. Doseninnenlack nach Anspruch 1, **dadurch gekennzeichnet, dass** die Säuregruppen des Copolymers oder der Copolymerenmischung in wasserdispergierter Form zumindest zu 30%, jedoch vorzugsweise nicht mehr als zu 50%, besonders bevorzugt nicht mehr als zu 40% neutralisiert vorliegen.

3. Doseninnenlack nach Anspruch 2, **dadurch gekennzeichnet, dass** der Doseninnenlack zur Neutralisation der Säuregruppen des Copolymers oder der Copolymerenmischung in wasserdispergierter Form als Neutralisationsmittel Ammoniak, Amine, metallisches Al oder Zn und/oder wasserlösliche Oxide und Hydroxide der Elemente Li, Na, K, Mg, Ca, Fe(II), Sn(II) enthält.

4. Doseninnenlack nach Anspruch 3, **dadurch gekennzeichnet, dass** das Neutralisationsmittel ausgewählt ist aus Ammoniak und/oder Aminen, wobei die Amine wiederum vorzugsweise ausgewählt sind aus Morpholin, Hydrazin, Hydroxylamin, Monoethanolamin, Diethanolamin, Triethanolamin, Dimethylethanolamin und/oder Diethylethanolamin.

5. Doseninnenlack nach einem oder mehreren der vorherigen Ansprüche, **dadurch gekennzeichnet, dass** das Copolymer oder die Copolymerenmischung eine Glasübergangstemperatur von nicht mehr als 80°C, vorzugsweise nicht mehr als 60 °C aufweist.

6. Doseninnenlack nach einem oder mehreren der vorherigen Ansprüche, **dadurch gekennzeichnet, dass** die aliphatischen und acyclischen Alken ausgewählt sind aus Ethen, Propen, 1-Buten, 2-Buten, Isobuten, 1,3-Butadien und/oder 2-Methylbuta-1,3-dien, vorzugsweise Ethen und/oder Propen.

7. Doseninnenlack nach einem oder mehreren der vorherigen Ansprüche, **dadurch gekennzeichnet, dass** die α,β-ungesättigten Carbonsäuren ausgewählt sind aus Zimtsäure, Crotonsäure, Fumarsäure, Itaconsäure, Maleinsäure, Acrylsäure und/oder Methacrylsäure, vorzugsweise Acrylsäure und/oder Methacrylsäure, besonders bevorzugt Acrylsäure.

8. Doseninnenlack nach einem oder mehreren der vorherigen Ansprüche, **dadurch gekennzeichnet, dass** der Gewichtsanteil der aliphatischen und acyclischen Alkene im Copolymer oder in der Copolymerenmischung zumindest 40 Gew.-%, vorzugsweise zumindest 60 Gew.-%, jedoch nicht mehr als 95 Gew.-% beträgt.

9. Doseninnenlack nach einem oder mehreren der vorherigen Ansprüche, **dadurch gekennzeichnet, dass** der wasserlösliche Härter basierend auf anorganischen Verbindungen der Elemente Zr und/oder Ti ausgewählt ist aus Alkoxiden und/oder Carbonaten, besonders bevorzugt aus Tetrabutoxyzirkonat, Tetrapropoxyzirkonat, Tetrabutoxytitanat, Tetrapropoxyzirkonat, Ammoniumzirkoniumcarbonat und/oder Ammoniumtitaniumcarbonat.

10. Doseninnenlack nach einem oder mehreren der vorherigen Ansprüche, **dadurch gekennzeichnet, dass** zusätzlich ein oder mehrere organische Polymere oder Copolymere, die Hydroxyl-Gruppen aufweisen, die jedoch nicht auf aromatischen Epoxiden beruhen, enthalten sind, vorzugsweise Polymere und/der Copolymere von Vinylalkohol, wobei die Hydroxylzahl der organischen Polymere oder Copolymere vorzugsweise zumindest 100 mg KOH/g beträgt.

11. Doseninnenlack nach einem oder mehreren der vorherigen Ansprüche enthaltend zumindest 40 Gew.-% Wasser und
a) 4-30 Gew.-%, vorzugsweise 10-20 Gew.-%, des Copolymers oder der Copolymerenmischung in dispergierter Form,
b) 0,05-4 Gew.-%, vorzugsweise 0,1-2 Gew.-%, des mindestens einen Härters basierend auf anorganischen Verbindungen der Elemente Zr und/oder Ti,
c) nicht mehr als 0, 1 Gew.-% an wasserlöslichen organischen Härtern mit Amino-Gruppen, Imin-Gruppen oder Carbodiimid-Gruppen;
d) nicht mehr als 5 Gew.-% an Emulgatoren ausgewählt aus nichtionischen Amphiphilen mit einem HLB-Wert von zumindest 8;
e) nicht mehr als 10 Gew.-%, vorzugsweise nicht mehr als 5 Gew.-%, an wassermischbaren organischen Lösemitteln;
f) nicht mehr als 10 Gew.-% an Hilfsstoffen ausgewählt aus Netzmitteln, Verlaufsmitteln, Entschäumern, Katalysatoren, Filmbildern, Stabilisatoren und/oder Neutralisationsmitteln.

12. Verfahren zur Innenbeschichtung von Weißblech- oder Aluminiumdosen, bei dem die Innenflächen der Dosen ggf. zunächst gereinigt werden und anschließend - mit oder ohne dazwischenliegendem Spülschritt - ein Doseninnenlack enthaltend
a) ein Copolymer oder eine Copolymerenmischung zumindest eines aliphatischen und acyclischen Alkens mit zumindest einer α,β-ungesättigten Carbonsäure in wasserdispergierter Form, wobei die Säurezahl des Copolymers oder der Copolymerenmischung zumindest 20 mg KOH / g, jedoch nicht mehr als 200 mg KOH / g beträgt und die Säuregruppen des Copolymers oder der Copolymerenmischung in wasserdispergierter Form zumindest zu 20%, jedoch nicht mehr als zu 60% neutralisiert vorliegen, und b) mindestens einen wasserlöslichen Härter basierend auf anorganischen Verbindungen der Elemente Zr und/oder Ti auf die Doseninnenflächen aufgebracht wird.

13. Verfahren gemäß Anspruch 12, **dadurch gekennzeichnet, dass** ein Doseninnenlack gemäß einem oder mehreren der Ansprüche 1 bis 11 verwendet wird.

14. Verfahren gemäß einem oder beiden der Ansprüche 12 und 13, **dadurch gekennzeichnet, dass** die gereinigte Dose vor der Aufbringung des Doseninnenlackes keinen solchen nasschemischen Behandlungsschritt durchläuft, der eine Konversionsbeschichtung mit zumindest 5 mg/m² bezogen auf solche Metallelemente bewirkt, die keine Bestandteile des Dosenmaterials sind.

15. Verfahren nach einem oder mehreren der Ansprüche 12 bis 14, **dadurch gekennzeichnet, dass** der Innenlack in einer Trockenschichtauflage von zumindest 1 g/m², jedoch vorzugsweise in einer Trockenschichtauflage von nicht mehr als 10 g/m² auf die Innenfläche der Dose aufgebracht wird.

16. Verfahren nach einem oder mehreren der Ansprüche 12 bis 15, **dadurch gekennzeichnet, dass** der Doseninnenlack im Sprühverfahren, vorzugsweise im Airless-Verfahren aufgebracht wird.

## Claims

1. A water-based can interior varnish containing, in addition to water,
a) a copolymer or copolymer mixture of at least one aliphatic and acyclic alkene having at least one α,β-unsaturated carboxylic acid in water-dispersed form, wherein the acid number of the copolymer or copolymer mixture is at least 20 mg KOH/g, but no more than 200 mg KOH/g, and at least 20%, but no more than 60%, of the acid groups of the copolymer or copolymer mixture in water-dispersed form are neutralized, and
b) at least one water-soluble curing agent based on inorganic compounds of the elements Zr and/or Ti, wherein the dispersed polymeric components of the water-based varnish have a D₅₀ value of less than 1 µm, wherein the amount by weight of the curing agent according to component b), determined as an amount by weight of the elements Zr and/or Ti with respect to the solids content of the copolymer or copolymer mixture according to component a) divided by the dimensionless acid number of the copolymer or copolymer mixture according to component a) in grams KOH/g, is greater than 0.04·X_{zr} + 0.02·X_{Ti}, but less than 0.12·X_{zr} + 0.06·X_{Ti}, wherein X_{zr} and X_{Ti} are the mass fractions of the elements Zr or Ti, respectively, of the curing agent according to component b) with respect to the total content of elements Zr and Ti of the curing agent, and wherein no more than 0.1 wt.% of water-soluble and water-dispersed organic curing agents comprising amino groups, imine groups or carbodiimide groups is contained.

2. The can interior varnish according to claim 1, **characterized in that** at least 30%, but preferably no more than 50%, particularly preferably no more than 40% of the acid groups of the copolymer or copolymer mixture in water-dispersed form are neutralized.

3. The can interior varnish according to claim 2, **characterized in that** in order to neutralize the acid groups of the copolymer or copolymer mixture in water-dispersed form, the can interior varnish contains ammonia, amines, metallic Al or Zn and/or water-soluble oxides and hydroxides of the elements Li, Na, K, Mg, Ca, Fe(II) and Sn(II) as neutralizing agents.

4. The can interior varnish according to claim 3, **characterized in that** the neutralizing agent is selected from ammonia and/or amines, the amines in turn preferably being selected from morpholine, hydrazine, hydroxylamine, monoethanolamine, diethanolamine, triethanolamine, dimethylethanolamine and/or diethylethanolamine.

5. The can interior varnish according to one or more of the preceding claims, **characterized in that** the copolymer or copolymer mixture has a glass transition temperature of no more than 80 °C, preferably no more than 60 °C.

6. The can interior varnish according to one or more of the preceding claims, **characterized in that** the aliphatic and acyclic alkenes are selected from ethene, propene, 1-butene, 2-butene, isobutene, 1,3-butadiene and/or 2-methylbuta-1,3-diene, preferably ethene and/or propene.

7. The can interior varnish according to one or more of the preceding claims, **characterized in that** the α,β-unsaturated carboxylic acids are selected from cinnamic acid, crotonic acid, fumaric acid, itaconic acid, maleic acid, acrylic acid and/or methacrylic acid, preferably acrylic acid and/or methacrylic acid, particularly preferably acrylic acid.

8. The can interior varnish according to one or more of the preceding claims, **characterized in that** the amount by weight of the aliphatic and acyclic alkenes in the copolymer or copolymer mixture is at least 40 wt.%, preferably at least 60 wt.%, but no more than 95 wt.%.

9. The can interior varnish according to one or more of the preceding claims, **characterized in that** the water-soluble curing agent based on inorganic compounds of the elements Zr and/or Ti is selected from alkoxides and/or carbonates, particularly preferably from tetrabutoxy zirconate, tetrapropoxy zirconate, tetrabutoxy titanate, tetrapropoxy zirconate, ammonium zirconium carbonate and/or ammonium titanium carbonate.

10. The can interior varnish according to one or more of the preceding claims, **characterized in that** one or more organic polymers or copolymers that comprise hydroxyl groups but are not based on aromatic epoxides are additionally contained, preferably polymers and/or copolymers of vinyl alcohol, the hydroxyl value of the organic polymers or copolymers preferably being at least 100 mg KOH/g.

11. The can interior varnish according to one or more of the preceding claims containing at least 40 wt.% water and
a) 4-30 wt.%, preferably 10-20 wt.%, of the copolymer or copolymer mixture in dispersed form;
b) 0.05-4 wt.%, preferably 0.1-2 wt.%, of the at least one curing agent based on inorganic compounds of the elements Zr and/or Ti;
c) no more than 0.1 wt.% water-soluble organic curing agents comprising amino groups, imine groups or carbodiimide groups;
d) no more than 5 wt.% emulsifiers selected from non-ionic amphiphiles having an HLB value of at least 8;
e) no more than 10 wt.%, preferably no more than 5 wt.% water-miscible organic solvents;
f) no more than 10 wt.% auxiliaries selected from wetting agents, flow-control agents, antifoaming agents, catalysts, film-forming agents, stabilizers and/or neutralizing agents.

12. A method for coating the interior of tinplate cans or aluminum cans, the interior surfaces of the cans optionally first being cleaned and subsequently, with or without an intermediate rinsing step, a can interior varnish containing
a) a copolymer or copolymer mixture of at least one aliphatic and acyclic alkene having at least one α,β-unsaturated carboxylic acid in water-dispersed form, wherein the acid number of the copolymer or copolymer mixture is at least 20 mg KOH/g, but no more than 200 mg KOH/g, and at least 20%, but no more than 60%, of the acid groups of the copolymer or copolymer mixture in water-dispersed form are neutralized, and b) at least one water-soluble curing agent based on inorganic compounds of the elements Zr and/or Ti, being applied to the interior surfaces of the can.

13. The method according to claim 12, **characterized in that** a can interior varnish according to one or more of claims 1 to 11 is used.

14. The method according to one or both of claims 12 and 13, **characterized in that** before the can interior varnish is applied, the cleaned can does not undergo any wet-chemical treatment step that brings about a conversion coating with at least 5 mg/m² with respect to metal elements that are not components of the can material.

15. The method according to one or more of claims 12 to 14, **characterized in that** the interior varnish is applied to the interior surface of the can in a dry layer coating of at least 1 g/m², but preferably in a dry layer coating of no more than 10 g/m².

16. The method according to one or more of claims 12 to 15, **characterized in that** the can interior varnish is applied by means of a spraying method, preferably an airless spraying method.

## Revendications

1. Vernis pour surfaces intérieures de boîtes à base d'eau contenant, outre de l'eau,
a) un copolymère ou un mélange de copolymères d'au moins un alcène aliphatique et acyclique comportant au moins un acide carboxylique α,β-insaturé sous forme dispersée dans l'eau, l'indice d'acidité du copolymère ou du mélange de copolymères valant au moins 20 mg KOH/g, néanmoins 200 mg KOH/g au maximum et les groupes acide du copolymère ou du mélange de copolymères sous forme dispersée dans l'eau se présentant sous forme neutralisée à au moins 20 %, néanmoins à 60 % au maximum, et
b) au moins un agent durcissant soluble dans l'eau se basant sur des composés inorganiques des éléments Zr et/ou Ti,
les composants polymères dispersés du vernis à base d'eau possédant une valeur D₅₀ inférieure à 1 µm,
la proportion en poids de l'agent durcissant selon le composant b) étant déterminée en tant que proportion en poids des éléments Zr et/ou Ti rapportée à la proportion en solides du copolymère ou du mélange de copolymères selon le composant a) divisé par l'indice d'acidité sans dimension du copolymère ou du mélange de copolymères selon le composant a) en gramme KOH/g supérieur à 0,04·X_{Zr} + 0,02·X_{Ti}, inférieur toutefois à 0,12·X_{Zr} + 0,06·X_{Ti}, X_{Zr} et X_{Ti} étant les fractions de masse respectives des éléments Zr ou Ti de l'agent durcissant selon le composant b) rapportées à la proportion totale des éléments Zr et Ti de l'agent durcissant,
et la proportion des agents durcissants solubles dans l'eau et dispersés dans l'eau, comportant des groupes amino, des groupes imine ou des groupes carbodiimide, s'élevant au maximum à 0,1 % en poids.

2. Vernis pour surfaces intérieures de boîtes selon la revendication 1, **caractérisé en ce que** les groupes acides du copolymère ou du mélange de copolymères dans une forme dispersée dans l'eau se présentent sous forme neutralisée au moins à 30 %, de préférence néanmoins à 50 % au maximum, de manière particulièrement préférée à 40 % au maximum.

3. Vernis pour surfaces intérieures de boîtes selon la revendication 2, **caractérisé en ce que** le vernis pour surfaces intérieures de boîtes destiné à neutraliser les groupes acides du copolymère ou du mélange de copolymères sous forme dispersée dans l'eau contient, en tant qu'agent de neutralisation, de l'ammoniaque, de l'amine, de l'Al ou du Zn métallique et/ou des oxydes et hydroxydes solubles dans l'eau des éléments Li, Na, K, Mg, Ca, Fe(II), Sn(II).

4. Vernis pour surfaces intérieures de boîtes selon la revendication 3, **caractérisé en ce que** l'agent de neutralisation est choisi parmi l'ammoniaque et/ou des aminés, les amines étant, pour leur part, choisies de préférence parmi la morpholine, l'hydrazine, l'hydroxylamine, la monoéthanolamine, la diéthanolamine, la triéthanolamine, la diméthyléthanolamine et/ou la diéthyléthanolamine.

5. Vernis pour surfaces intérieures de boîtes selon une ou plusieurs des revendications précédentes, **caractérisé en ce que** le copolymère ou le mélange de copolymères présente une température de transition de verre d'au maximum 80 °C, de préférence d'au maximum 60 °C.

6. Vernis pour surfaces intérieures de boîtes selon une ou plusieurs des revendications précédentes, **caractérisé en ce que** les alcènes aliphatiques et acycliques sont choisis parmi l'éthylène, le propène, le 1-butène, le 2-butène, l'isobutène, le 1,3-butadiène et/ou le 2-méthylbutane-1,3-diène, de préférence l'éthylène et/ou le propène.

7. Vernis pour surfaces intérieures de boîtes selon une ou plusieurs des revendications précédentes, **caractérisé en ce que** les acides carboxyliques α,β-insaturés sont choisis parmi l'acide cinnamique, l'acide crotonique, l'acide fumarique, l'acide itaconique, l'acide maléique, l'acide acrylique et/ou l'acide méthacrylique, de préférence l'acide acrylique et/ou l'acide méthacrylique, de manière particulièrement préférée l'acide acrylique.

8. Vernis pour surfaces intérieures de boîtes selon une ou plusieurs des revendications précédentes, **caractérisé en ce que** la proportion en poids des alcènes aliphatiques ou acycliques dans le copolymère ou dans le mélange de copolymères vaut au moins 40 % en poids, de préférence au moins 60 % en poids, néanmoins 95 % en poids au maximum.

9. Vernis pour surfaces intérieures de boîtes selon une ou plusieurs des revendications précédentes, **caractérisé en ce que** l'agent durcissant soluble dans l'eau se basant sur des composés inorganiques des éléments Zr et/ou Ti est choisi parmi les alcoxydes et/ou les carbonates, de manière particulièrement préférée parmi le tétrabutoxyzirconate, le tétrapropoxyzirconate, le tétrabutoxytitanate, le tétrapropoxyzirconate, le carbonate d'ammonium et de zirconium et/ou le carbonate d'ammonium et de titane.

10. Vernis pour surfaces intérieures de boîtes selon une ou plusieurs des revendications précédentes, **caractérisé en ce qu'**il contient également un ou plusieurs polymères ou copolymères organiques présentant des groupes hydroxyles qui ne reposent toutefois pas sur des époxydes aromatiques, de préférence des polymères et/ou des copolymères d'alcool vinylique, la valeur hydroxyle des polymères ou copolymères organiques valant de préférence au moins 100 mg KOH/g.

11. Vernis pour surfaces intérieures de boîtes selon une ou plusieurs des revendications précédentes contenant au moins 40 % en poids en eau et
a) 4-30 % en poids, de préférence 10-20 % en poids du copolymère ou du mélange de copolymères sous forme dispersée,
b) 0,05-4 % en poids, de préférence 0,1-2 % en poids de l'au moins un agent durcissant se basant sur des composés inorganiques des éléments Zr et/ou Ti,
c) au maximum 0,1 % en poids en agent durcissant organique soluble dans l'eau comportant des groupes amino, des groupes imine ou des groupes carbodiimide ;
d) au maximum 5 % en poids en émulsifiants choisis parmi les amphiphiles non ioniques ayant une valeur HLB d'au moins 8 ;
e) au maximum 10 % en poids, de préférence au maximum 5 % en poids en solvants organiques miscibles dans l'eau ;
f) au maximum 10 % en poids en adjuvants choisis parmi les agents mouillants, les agents de nivellement, les agents anti-mousse, les catalyseurs, les agents filmogènes, les agents stabilisateurs et/ou les agents de neutralisation.

12. Procédé de revêtement de surfaces internes de boîtes en fer blanc ou en aluminium, lors duquel les surfaces internes des boîtes sont d'abord, le cas échéant, nettoyées, puis où est appliqué - avec ou sans étape intermédiaire de rinçage - un vernis de surface interne de boîte contenant
a) un copolymère ou un mélange de copolymères d'au moins un alcène aliphatique et acyclique comportant au moins un acide carboxylique α,β-insaturé sous forme dispersée dans l'eau, l'indice d'acidité du copolymère ou du mélange de copolymères valant au moins 20 mg KOH/g, néanmoins 200 mg KOH/g au maximum et les groupes acide du copolymère ou du mélange de copolymères sous forme dispersée dans l'eau se présentant sous forme neutralisée à au moins 20 %, néanmoins à 60 % au maximum, et b) au moins un agent durcissant soluble dans l'eau se basant sur des composés inorganiques des éléments Zr et/ou Ti sur les surfaces internes de la boîte.

13. Procédé selon la revendication 12, **caractérisé en ce que** l'on utilise un vernis de surface interne de boîte selon une ou plusieurs des revendications 1 à 11.

14. Procédé selon une ou les deux des revendications 12 et 13, **caractérisé en ce que** la boîte nettoyée ne passe pas par une telle étape de traitement chimique humide avant l'application du vernis pour surfaces intérieures de boîtes, laquelle étape produit un revêtement de conversion avec au moins 5 mg/m² rapporté à ces éléments métalliques, qui ne sont pas des composants de la matière de la boîte.

15. Procédé selon une ou plusieurs des revendications 12 à 14, **caractérisé en ce que** le vernis interne est appliqué dans un revêtement en couche sèche d'au moins 1 g/m², de préférence toutefois dans un revêtement en couche sèche de 10 g/m² au maximum sur les surfaces internes de la boîte.

16. Procédé selon une ou plusieurs des revendications 12 à 15, **caractérisé en ce que** le vernis pour surfaces intérieures de boîtes est appliqué dans un procédé de pulvérisation, de préférence dans un procédé de pulvérisation airless.
